# EUROPEAN PATENT SPECIFICATION

(11) **EP 3 804 869 B1**
(45) Date of publication and mention of the grant of the patent: **20.08.2025**
(21) Application number: 20200579.9
(22) Date of filing: 07.10.2020
(51) Int. Cl.: B09B 3/00, B03B 1/02, B09B 5/00, C22B 9/00, H01M 6/52, H01M 10/054, B03B 9/06

(54) **METHOD FOR DISCHARGING THE ELECTRIC CHARGE OF BATTERIES AND DEVICE THAT IMPLEMENTS SAID METHOD**
VERFAHREN ZUM ENTLADEN DER ELEKTRISCHEN LADUNG VON BATTERIEN UND VORRICHTUNG ZUR DURCHFÜHRUNG DES VERFAHRENS
PROCÉDÉ DE DÉCHARGE DE LA CHARGE ÉLECTRIQUE DES BATTERIES ET DISPOSITIF METTANT EN OEUVRE LEDIT PROCÉDÉ

(30) Priority: 08.10.2019 IT 201900018185
(43) Date of publication of application: 14.04.2021
(60) Divisional application: 25179953.2
(73) Proprietor: LAREN SRL, 36050 Quinto Vicentino (VI) (IT)
(72) Inventor: FORESTAN, Angelo, 36100 Vicenza (IT); ALBA, Catya, 36042 Breganze (VI) (IT); FORESTAN, Renzo, 36050 Bolzano Vicentino (VI) (IT)
(74) Representative: Marchioro, Paolo

(56) References cited:
- EP-A2- 1 333 523
- WO-A1-02/23651
- WO-A1-2015/198210
- CN-A- 105 576 317
- US-A1- 2012 305 684

## Description

The present invention relates to a method for discharging the electric charge of batteries, cells and/or rechargeable batteries.

The aforesaid device can also form an integral part of a plant for the treatment and recycling of such batteries.

Batteries, particularly lithium and lithium-ion batteries, are a type of batteries commonly used in consumer electronic devices such as laptops, tablets, mobile phones, portable electronic devices, bicycles, motorcycles and electric cars, stationary storage systems, robots, etc.

A particular criticality relating to this type of batteries is constituted by the procurement of the raw materials necessary for their construction, especially as regards the procurement of metals such as lithium, cobalt, nickel and titanium. Lithium and other metals are in fact present in nature in limited quantities and areas and require particularly complicated and expensive extraction processes.

Precisely for these reasons, in addition to the greater sensitivity to environmental issues, the recycling of batteries and the recovery of the materials contained in them is increasingly encouraged.

The processes for recycling lithium and lithium-ion batteries essentially comprise hydrometallurgical and pyrometallurgical processes.

An example of a process for the recovery of the materials forming the aforesaid batteries is the one described in the document CN 105576317, in which the materials making up the batteries are extracted by means of water vapour which, thanks to the water molecules, cracks the aforesaid batteries and extracts some of the components present therein.

Another example of a known process for the recovery of battery-forming materials is described in the document WO 2015/198210. The process described in this document is intended for the recovery of mercury present, among other things, also in mercury batteries. The aforesaid process provides for grinding the mercury batteries to facilitate the release of the element during the subsequent heating of said ground batteries. The heating then causes the evaporation of the mercury in the form of vapour which is condensed for the recovery of the liquid mercury.

The first critical point for carrying out these processes is the need to be able to access the internal content of the batteries.

In fact, lithium and lithium-ion batteries contain numerous compounds that are harmful to human health and the environment and, moreover, present a high risk of flammability, whether they are fully charged or partially charged, due to the presence of metallic lithium, fluorinated compounds, sulphur compounds, thionyl chloride and sulphur dioxide.

Therefore, the aforesaid batteries, if they are not completely inactive/ discharged, cannot be opened and handled in environments where oxygen, water or humidity are present, due to the high risk of releasing harmful gases and developing a start of fire and/or explosion.

Some processes and devices are known in the art for carrying out the inactivation of such batteries.

A first known process for the inactivation of batteries exploits particular devices generating very high temperatures, such as plasma torches, which melt the metals present in the aforesaid batteries. The molten metals then precipitate on the bottom of the device where they will be collected and treated according to the prior art, whereas the metals with low boiling point are collected by the catchment systems.

Another known process for carrying out the inactivation of batteries, on the other hand, operates in a way opposite to the previous one. According to this process, in fact, the batteries to be inactivated are arranged in a device resistant to low temperatures. Inside this device, the batteries are cooled down up to about -178°C in order to block any explosions or fires and can then be ground in order to form a black powder, commonly called black mass.

Subsequently, this powder must be dissolved in a basic solution in order to be used for the recovery of the metals contained therein.

However, said inactivation processes and devices have various drawbacks.

A drawback is represented by the complexity of realising the plants necessary for carrying out the aforesaid processes.

It is in fact necessary to provide for the realisation of plants equipped with tanks and reactors resistant to very high (or very low) temperatures.

It is evident that such tanks and reactors, in addition to being particularly expensive, require specialized labour and are subjected to particularly stringent regulations as regards safety.

Another drawback is represented by the fact that in some cases the crushing of the batteries must also be carried out inside such tanks, under controlled atmosphere and temperature or under depression.

A further drawback of these processes is represented by the fact that, during the inactivation of the batteries by the high temperature, the temperature and the reactions inside the devices are not controllable.

Since the temperature inside the device cannot be controlled, it will not be possible to control the oxidation state of the metals and in particular of lithium. On the other hand, this control is very important in order to inactivate the batteries for the recovery of lithium as oxide and for the recovery of the other compounds making up the cathode and the anode of the batteries themselves without modifying or destroying the metal compounds they contain.

Last but not least, another drawback of the known methods and devices is that they require large quantities of basic or acid aqueous solutions for the safe treatment of the powder obtained from such batteries.

The main object of the present invention is therefore to implement a method and a device that allow to inactivate/discharge the electric charge of the batteries, cells and/or rechargeable batteries, in particular of the lithium and/or lithium-ion type, so that these batteries, cells and/or rechargeable batteries are completely discharged and can therefore be subjected to crushing for recycling and recovering the materials of which they are made up.

In particular, it is an object of the present invention that the aforesaid method and device carry out the discharge of the electric charge present in the batteries safely, with no risk of developing fires, explosions or harmful gases.

Furthermore, it is an object that the device runs dry with no need to provide for high quantities of aqueous solutions like in the prior art.

Furthermore, it is an object that the device can be integrated in a battery recycling and recovery plant of a known type, with no need to adapt or modify pre-existing plants.

The objects mentioned above and others which will be better highlighted hereinafter are achieved by a method for discharging the electric charge of batteries, cells and/or rechargeable batteries as described in the main claim.

The objects are also achieved with the realisation of a device configured to implement this method, and with a plant for the treatment of batteries, cells and/or rechargeable batteries comprising this device.

Further characteristics of the method are described in the dependent claims. The aforesaid objects, together with the advantages that will be mentioned below, will be better highlighted during the description of some preferred embodiments of the invention which are given, by way of non-limiting example, with reference to the attached drawings, where:
- Figure 1 shows an axonometric view of the device for discharging the electric charge of batteries, cells and/or rechargeable batteries according to a first embodiment of the invention;
- Figure 2 shows a side view of the device of Figure 1 with the bottom of the inactivation chamber in the opening position;
- Figure 3 shows a side view of the device of Figure 1 with the bottom of the inactivation chamber in the closing position;
- Figure 4 shows a sectional view, according to a vertical section plane, of the device of Figure 2;
- Figure 5 shows a sectional view, according to a vertical section plane, of the device of Figure 3;
- Figure 6 shows an axonometric view of the device for discharging the electric charge of batteries, cells and/or rechargeable batteries according to a second embodiment of the invention;
- Figure 7 shows a sectional view, according to a vertical section plane, of the device of Figure 6;
- Figure 8 shows a sectional view, according to a vertical section plane, of the device of Figure 6 with the bottom in the open position;
- Figures 9 to 11 show the device of Figure 6, in different operating configurations, during the application of the method of the invention.

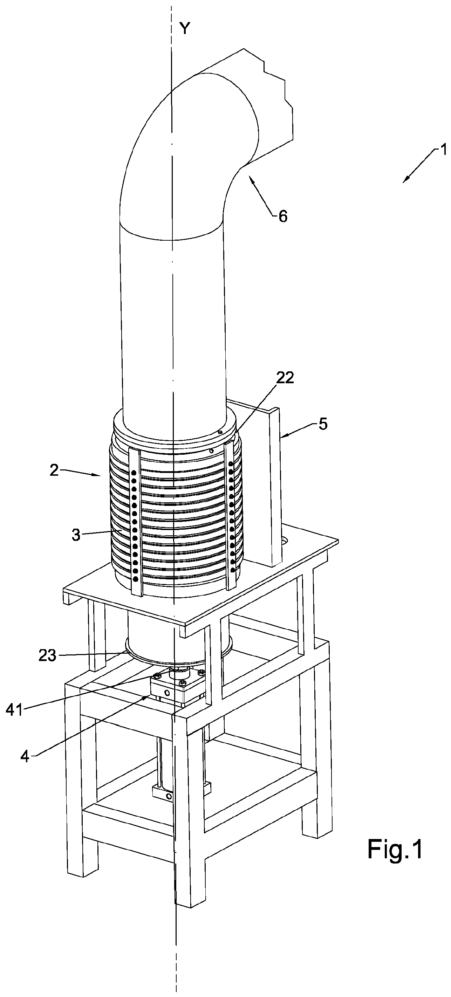

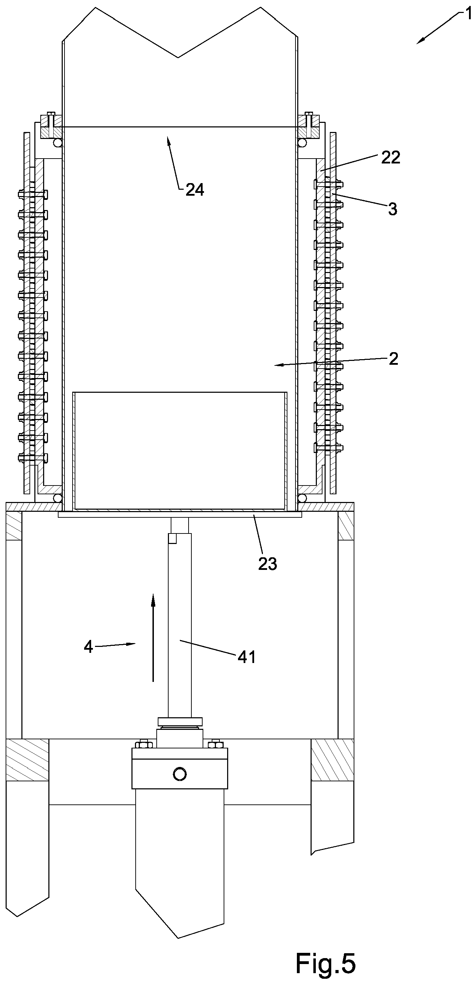

The device for discharging the electric charge of batteries, cells and/or rechargeable batteries, according to a first embodiment of the invention, is shown in Figures 1 to 5 where it is indicated as a whole with the number **1.**

The device **1** is used to discharge the electric charge of the batteries, cells and/or rechargeable batteries, preferably batteries, cells and/or rechargeable batteries selected from the group comprising lithium, lithium-ion, lithium polymer and nickel metal batteries, cells and rechargeable batteries, in order to eliminate the residual electric charge and thus make them safely handleable for the recovery of the materials they contain.

It is specified that, for simplicity's sake of reading, in this document the generic term batteries will be used which, however, must be considered as also comprising cells and/or rechargeable batteries of all types, including lithium, lithium-ion, lithium polymer and nickel metal, preferably lithium and lithium-ion ones.

It is also specified that in this document the term "to discharge the electric charge" is to be considered synonymous with the terms "to inactivate", "inactivation" and the like.

Furthermore, the term "discharged batteries" is to be considered synonymous with the term "inactivated batteries", i.e. batteries free of residual electric charge.

According to the first embodiment of the invention, the device **1** comprises an inactivation chamber **2** delimited by one or more walls **22** and by a bottom **23.**

The inactivation chamber **2** is adapted to contain the batteries to be discharged introduced through an inlet path **21** and to allow the implementation of the discharge method that will be described later.

The device **1** further comprises an outlet path **25** of the discharged batteries defined in the inactivation chamber **2.**

Preferably, according to the first embodiment of the invention, the inlet path **21** and the outlet path **25** coincide. For simplicity's sake, in Figures 1 to 5 showing an example of the device according to the first embodiment and in the description below concerning the first embodiment of the device of the invention, only the inlet path will be indicated with the number **21.**

As shown in Figure 1, the inactivation chamber **2** preferably has a cylindrical shape.

However, it is not excluded that, according to alternative embodiments of the invention, the inactivation chamber **2** has a prismatic shape.

According to the first embodiment of the invention, the height:diameter ratio of the inactivation chamber 2 is substantially corresponding to 2:1.

Advantageously, the observance of this ratio allows to carry out a gradual heating of the batteries placed inside the inactivation chamber **2,** according to what will be described later, favouring the release of energy in a continuous and controlled way, thus avoiding unwanted explosions of the batteries themselves.

According to the first embodiment of the invention, the aforesaid inlet path **21** is defined below the inactivation chamber **2** in a substantially vertical direction **Y.**

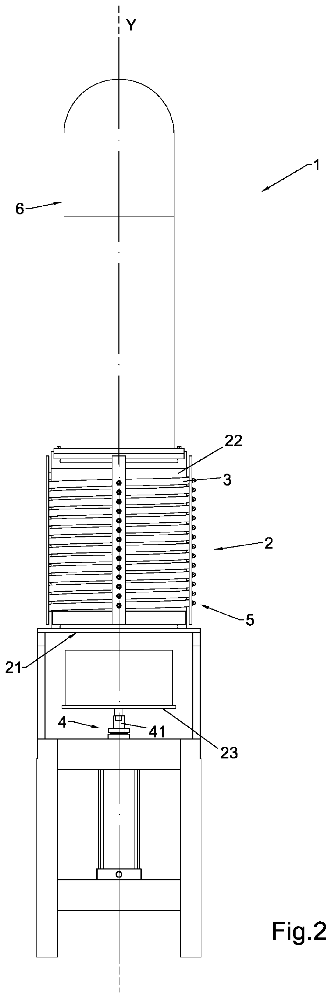

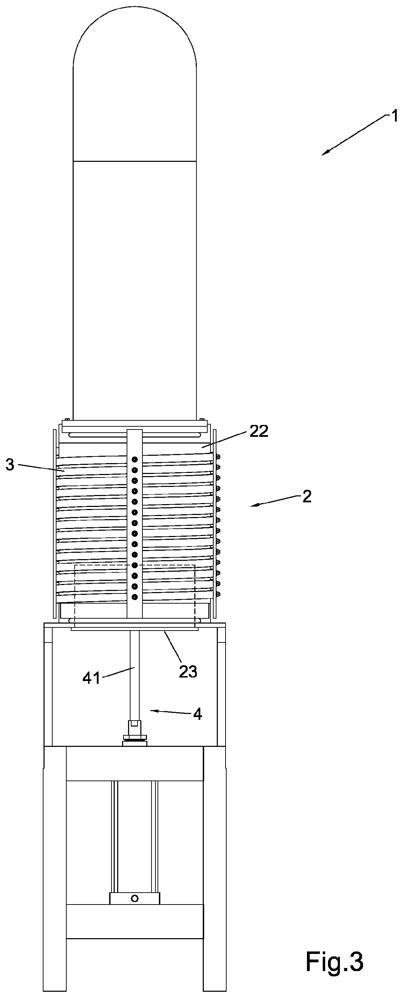

Advantageously, the bottom **23** of the inactivation chamber **2** is movable between a closing position, shown in Figure 3, in which the bottom **23** is positioned so as to close the aforesaid inlet path **21** and the inactivation chamber **2** is isolated from the external environment, and an opening position, shown in Figure 2, in which the inactivation chamber **2** communicates with the external environment by means of the aforementioned inlet path **21.**

Operationally, when the bottom **23** is in the opening position, the operator loads the batteries to be discharged on the latter.

Once this loading is done, the bottom **23,** with the batteries to be discharged, is moved so as to close the inlet path **21** so that the batteries thereon are arranged into the inactivation chamber **2** and that the latter is isolated from the external environment.

Preferably, the loading of the batteries to be discharged inside the inactivation chamber **2,** through the inlet path **21,** takes place from the bottom upwards according to the vertical direction Y.

The movement of the bottom **23** is carried out by means of movement means **4** configured to bring the bottom **23** closer to/away from the inactivation chamber **2** through the inlet path **21.**

Preferably, the movement means **4** comprise a hydraulic or compressed air piston **41** with telescopic development with the free end associated with the bottom **23.**

From the operating point of view, the movement of the piston **41** and therefore of the bottom **23** according to the vertical direction **Y** allows to move the batteries arranged on the bottom **23** towards the inside of the inactivation chamber **2** or away from the latter.

This away movement is particularly advantageous because it allows the batteries to be extracted from the inactivation chamber **2** when they are completely discharged/inactive.

It is not excluded that, according to alternative embodiments of the invention, this movement of the bottom **23** may be of the horizontal or mixed type.

According to the first embodiment of the invention, the device **1** comprises at least one inductive winding **3** configured to be powered by an electric current, preferably an alternating electric current.

This inductive winding **3** is arranged externally to the walls **22** of the inactivation chamber **2.**

Furthermore, this inductive winding **3** is preferably wound around a winding axis **A.**

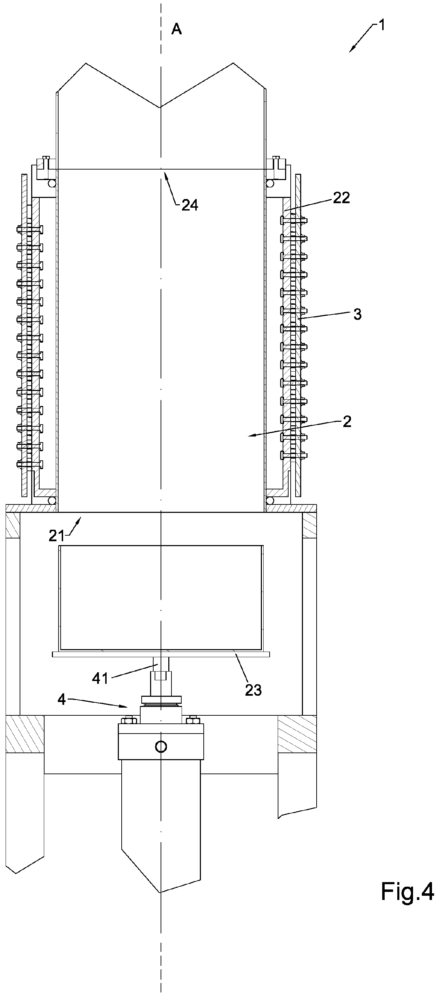

Said winding axis **A** is also preferably orthogonal to the bottom **23,** as shown in Figure 4.

The inductive winding **3,** when powered by the electric current, is adapted to heat by induction the walls **22** of the inactivation chamber **2** and, optionally, the bottom **23** when it is arranged in the closing position.

The walls **22** and, optionally, the bottom **23** are made of a material suitable for transmitting heat. Such material is preferably a conductive material.

Advantageously, the heating by induction of the walls **22** and, optionally, of the bottom **23** causes the heating of the batteries arranged inside the inactivation chamber **2** by irradiation of the same batteries by the induction-heated walls **22.**

First of all, the batteries positioned in contact with and near the walls **22** and then, subsequently, all the other batteries present inside the inactivation chamber **2** will be heated.

Preferably but not necessarily, the device **1** comprises at least one layer of heat-insulating material arranged between the walls **22** and the inductive winding **3** which advantageously allows to reduce the heat loss that occurs by transmitting the heat from the inactivation chamber **2** to the external environment.

One of the advantages of using the device of the invention is represented by the fact that, by means of the passage of electric current in the inductive winding **3,** it is possible to trigger the heating process of the batteries and, subsequently to such triggering, the passage of electric current can be interrupted. As a result of the induction, the heat will be, in fact, transferred to the walls **22,** then by irradiation to the batteries located near the latter and, subsequently, from these batteries to the batteries arranged more internally to the inactivation chamber **2** by means of an exothermic reaction which generates additional heat, speeding up the passage of heat among the same batteries.

Heating by induction can be controlled by the operator by varying the power and the frequency of the electric current flowing through the inductive winding **3** according to needs.

According to the first embodiment of the invention, the device **1** operates at a power comprised between 5 and 70 kW, more preferably comprised between 8 and 40 kW, even more preferably between 12 kW and 35 kW.

Furthermore, the device **1** operates with an electric current, preferably of the alternating type, at a frequency comprised between 2 and 6 kHz, preferably between 3 kHz and 5 kHz, more preferably at about 4 kHz.

It is not excluded that the power and frequency values may be varied according to the actual size of the inactivation chamber **2** and/or the type of the batteries to be discharged.

According to the first embodiment of the invention, the device **1** comprises inerting means, not shown in the figures, configured to introduce one or more inert gases into said inactivation chamber **2.**

Such inert gases comprise, by way of example, carbon dioxide, nitrogen, argon and mixtures thereof.

The inerting means advantageously allow to eliminate the oxygen and any humidity present inside the inactivation chamber **2.**

This advantageously allows to obtain discharged batteries which are in the solid form and are dry, therefore can be easily handled by the operator. Moreover, thanks to these means, the formation of waste in the liquid form which must be disposed of by the operator is advantageously avoided.

According to the first embodiment of the invention, the device **1** further comprises cooling means **5** adapted to decrease the temperature of the inductive winding **3** during the passage of the electric current.

Cooling means **5** with cooling fluid, for example glycol water, of the type per se known, are particularly preferred.

Said cooling means **5** substantially comprise a tank for the coolant fluid and pumping means which suck the coolant fluid from the aforesaid tank and pump it inside a cooling jacket which surrounds the inactivation chamber **2.**

In particular, the coolant fluid is pumped from the tank inside the coils that make up the inductive winding **3.**

The coolant fluid is kept inside the tank at a temperature of about 25°C in such a way that, when it is pumped inside the inductive winding **3,** the temperature of the latter decreases.

However, it is not excluded that, according to variant embodiments of the present invention, the cooling means may be of a type other than the one described.

It is known that the heating of the various parts that make up a battery, cell or rechargeable battery causes the emission of toxic combustion gases which must not be released into the environment except after an appropriate treatment.

With the device **1** of the invention, this gas emission occurs internally to the inactivation chamber **2.**

Furthermore, advantageously, according to the first embodiment of the invention, the walls **22** and the bottom **23** of the inactivation chamber **2** are made of one or more materials particularly resistant to aggressive chemical agents such as those that are developed by the combustion of batteries, for example hydrofluoric acid.

Therefore materials made of metal alloys resistant to strong acids, for example nickel and copper alloys, are particularly preferred.

Furthermore, according to the first embodiment of the invention, on at least one of the walls **22** of the inactivation chamber **2** at least one opening **24** is defined adapted to allow the outflow of these combustion gases produced in the inactivation chamber **2** during the operation of the device **1,** that is, during the heating of the batteries contained therein.

Preferably, this opening **24** is defined above the inactivation chamber **2** according to the vertical direction **Y,** as shown in Figure 4.

At or near this opening **24,** the device **1** according to the first embodiment of the invention comprises a group **6** for the abatement of the gases produced during the combustion of the batteries.

Said gas abatement group **6** comprises a cyclone separator, not represented in the figures, adapted to separate from the aforesaid gases the powder particles present therein deriving from the heating of the batteries.

The cyclone separator essentially comprises a cylindrical-conical vessel which develops in a longitudinal direction.

An inlet path and an outlet path of the combustion gases are also identified in the cyclone separator.

The inlet path is arranged above this vessel and is adapted to be connected to the opening **24** of the inactivation chamber **2,** so as to allow the passage of the combustion gases from the inactivation chamber **2** to the cyclone separator.

Preferably, the cyclone separator is communicating with the opening **24** by means of the aforesaid inlet path.

Operationally, the powder-laden combustion gases coming from the inactivation chamber **2** through the opening **24** enter the vessel by means of the aforesaid inlet path.

Due to the geometric conformation of the vessel, the gases descend towards the lower part of the vessel itself, establishing a cyclonic motion according to a spiral orientation.

In this way, the powder particles present in the gases are deposited by gravity on the conical bottom of the vessel whereas the combustion gases, cleaned of these particles, are directed towards the outlet path.

Preferably, the cyclone separator is configured to separate the fraction of particles having sizes greater than about 3 µm, preferably greater than about 5 µm from the combustion gases.

This characteristic advantageously allows to extract from the gases the powdery fraction comprising graphite, spinels and metals deriving from the cathode or anode of the aforesaid batteries.

Advantageously, it is thus possible to recover the graphite from the combustion gases and, moreover, to prevent particles with sizes greater than 3 µm from being dispersed into the environment or from being transported by the gases to the abatement systems arranged past this cyclone separator and which will be described further on.

However, it is not excluded that, according to alternative embodiments of the invention, the aforesaid cyclone separator is not present.

Returning to the first embodiment of the invention, the gas abatement group **6** also comprises a scrubber configured to abate the concentration of harmful gaseous substances, particularly acid substances, present in the stream of gases produced by the heating of the batteries in the inactivation chamber **2.**

The scrubber comprises an inlet path of the gases received by the cyclone separator. This inlet path of the scrubber is adapted to be connected to the outlet path of the cyclone separator, so as to allow the passage of the combustion gases from the cyclone separator to the scrubber.

Preferably, the scrubber is communicating with the aforesaid cyclone separator by means of the aforesaid outlet path of the latter.

Said scrubber, not shown in the figures, is a scrubber of the type per se known in the art and is configured to decrease the concentration of certain substances present in a gas stream.

For the purposes of the present invention, the aforesaid scrubber is preferably configured to abate the concentration of hydrofluoric acid and phosphoryl fluoride from the combustion gas stream.

The abatement of the concentration of these compounds preferably takes place by basic washing of the combustion gases in countercurrent with a basic solution of potassium and/or sodium hydroxide according to methods per se known that will not be further described.

It is not excluded that, according to alternative embodiments of the invention, the abatement of the concentration of the harmful substances present in the combustion gases does not occur by using a scrubber but by means of other devices known in the art to carry out this abatement.

Returning to the first embodiment of the invention, the device **1** also comprises a heat exchanger configured to decrease the temperature of the basic solution circulating in the scrubber.

This heat exchanger is a heat exchanger of the type per se known in the art.

It is preferably communicating with the scrubber, particularly with the bottom of the scrubber, so as to receive from the latter the basic solution used for the treatment of the combustion gases described above.

Operationally, the basic solution coming from the scrubber enters the heat exchanger where it loses part of its heat so that, at the exit from the exchanger, it has a temperature comprised between 30 and 75°C, preferably between 40 and 65°C.

The cooled basic solution is then transferred back to the scrubber where it will perform its function.

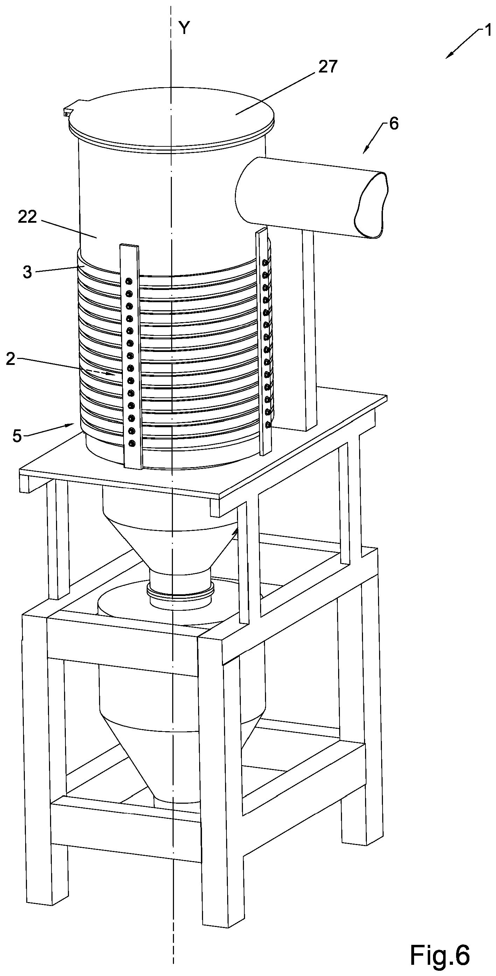

A second embodiment of the device **1,** shown in Figures 6 to 11, is also part of the invention which comprises all the characteristics described for the first embodiment, including the variants, except for the fact that the inlet path **21** and the outlet path **25** do not correspond to each other.

In particular, according to the second embodiment of the invention, the inlet path **21** is defined above the inactivation chamber **2,** preferably above the inactivation chamber **2** according to the direction **Y.**

The outlet path **25** is defined in the inactivation chamber **2,** on the opposite side with respect to the inlet path **21.**

Preferably, the outlet path **25** is defined below the inactivation chamber **2** according to the direction **Y.**

Operationally, the loading of the batteries to be discharged into the inactivation chamber **2** through the inlet path **21** takes place from top to bottom according to the aforesaid direction **Y.**

However, it is not excluded that, according to alternative embodiments of the invention, this inlet path **21** is defined laterally to the inactivation chamber **2** and therefore the batteries are loaded in a substantially horizontal direction.

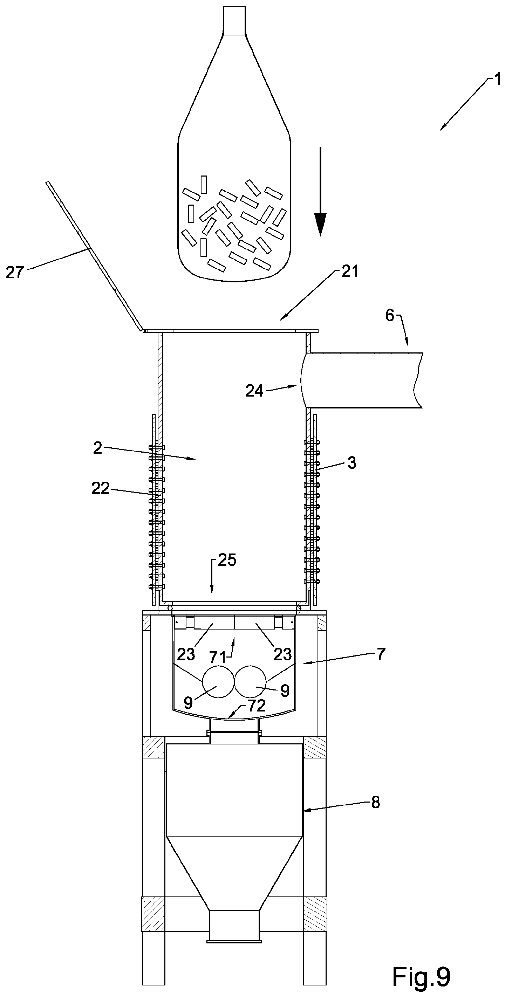

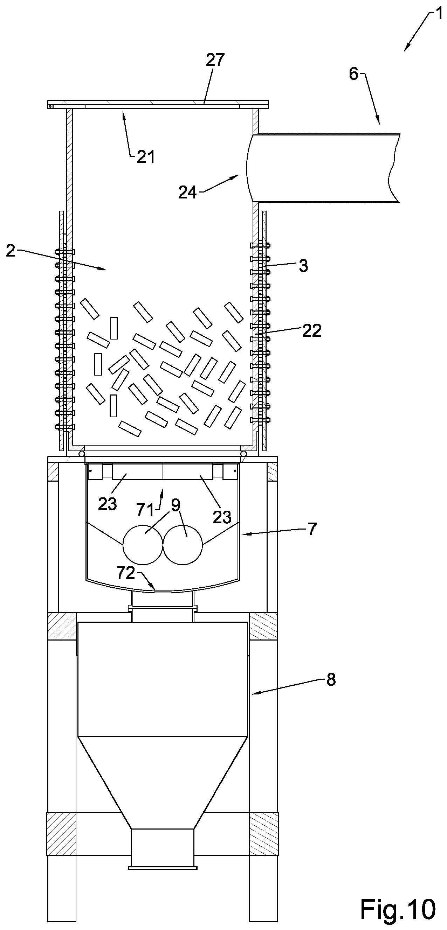

Returning to the second embodiment of the invention, at the inlet path **21,** the device **1** is provided with a cover **27** arranged to close said inlet path **21** and configured to be moved, automatically or manually, by an operator, between an open configuration, shown in Figure 9, in which the operator can introduce the batteries to be discharged into the inactivation chamber **2,** and a closed configuration, shown in Figure 10, in which the inactivation chamber **2** is isolated from the external environment.

According to this second embodiment of the invention, the opening **24** for the outflow of the combustion gases is defined on one of the walls **22,** laterally to the inactivation chamber **2.**

According to the second embodiment, the bottom **23** of the inactivation chamber **2** is movable between a closing position, in which the bottom **23** is positioned so as to close the aforesaid outlet path **25,** and an opening position in which the inactivation chamber **2** communicates with the external environment through the aforementioned outlet path **25.**

Operationally, when the bottom **23** is in the opening position, access to the inside of the inactivation chamber **2** and the extraction of the discharged batteries contained therein are permitted.

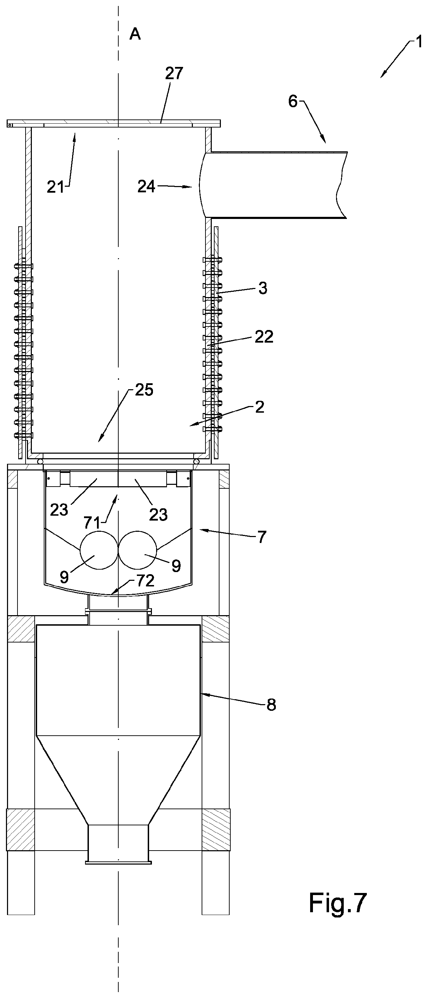

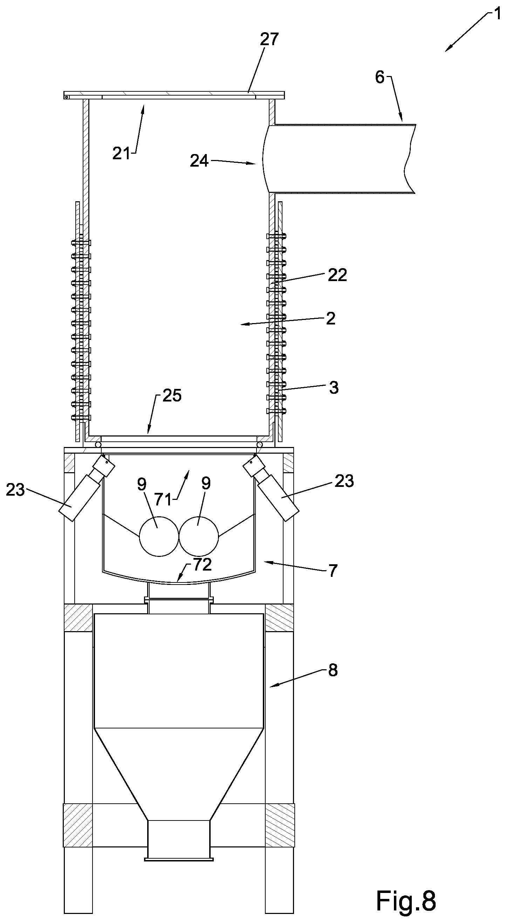

This opening position is shown in Figure 8, whereas the closing position is shown in Figure 7.

It is not excluded that, according to variants of the second embodiment of the invention, the bottom **23** is fixed in a closing position of the inactivation chamber **2** and that the outlet path **25** substantially comprises a through hole made on said bottom **23.**

According to said variant, at the outlet path **25** there is preferably a movable door configured to assume a position for closing this outlet path **25** in which access to the inactivation chamber **2** is prevented and an opening position in which, on the other hand, access to the latter for the extraction of the discharged batteries is permitted.

Returning to the second embodiment of the invention, the device **1** also comprises a tank **7** of the discharged batteries received from the inactivation chamber **2.**

Preferably, this tank **7** and the inactivation chamber **2** are arranged adjacent to each other from the bottom upwards according to the direction **Y,** as shown in Figure 7.

In particular, the tank **7** comprises an inlet mouth **71** facing the outlet path **25** of the inactivation chamber **2.**

Said tank **7** is configured to receive the discharged batteries from the inactivation chamber **2** through the outlet path **25,** the aforesaid inlet mouth **71** and the bottom **23** arranged between the inactivation chamber **2** and the tank **7.**

In particular, the tank **7** is communicating with the inactivation chamber **2** through the bottom **23.**

This bottom **23** is advantageously movable between a closing position, shown in Figure 7, in which the bottom **23** is positioned so as to close the outlet path **25** and the inactivation chamber **2** is isolated from the tank **7,** and an opening position, shown in Figure 8, in which the inactivation chamber **2** is communicating with the tank **7** to allow the transfer of the discharged batteries from the inactivation chamber **2** to the tank **7.**

According to the second embodiment of the invention, the device **1** further comprises dosing means, not shown in the figures, interposed between the outlet path **25** and the inlet mouth **71** of the tank **7.**

These dosing means advantageously allow to transfer predefined quantities of discharged batteries from the inactivation chamber **2** to the tank **7.**

Preferably but not necessarily, the dosing means comprise gravimetric drop dosing means, star-shaped dosing means and the like.

It is not excluded that, according to alternative embodiments of the invention, such dosing means are not present.

According to the second embodiment of the invention, the device **1** comprises grinding means **9** configured to carry out the grinding/crushing of the discharged batteries received from the inactivation chamber **2.**

Said grinding means are preferably arranged in the tank **7.**

Examples not to be considered as limiting of such grinding means **9** comprise hammer mills, knife mills, fine blade mills and similar devices.

The grinding means **9** are configured to shred the components of the discharged batteries, such as, by way of example not to be considered as limiting, the anode, the cathode and the casing containing the cell.

Furthermore, said grinding means **9** are configured to grind the aforesaid discharged batteries and the aforesaid components to produce a powder.

Such powder is composed of particles preferably having sizes of less than 5000 µm, preferably less than 1500 µm, more preferably **a** size comprised between 200 and 1000 µm.

Furthermore, this powder is composed for most of its weight by graphite and metal particles coming from the anode and cathode of the batteries and generally is called black mass.

It is not excluded that, according to alternative embodiments of the invention, such grinding means are configured differently from what is indicated and/or that said grinding means are not arranged in the tank **7** or furthermore that said grinding means are not present.

Returning to the second embodiment of the invention, the device **1** further comprises a collection chamber **8** for the accumulation of the black mass powder received from the tank **7.**

The tank **7** and the collection chamber **8** are communicating with each other and preferably arranged adjacent one above the other according to the vertical direction **Y.**

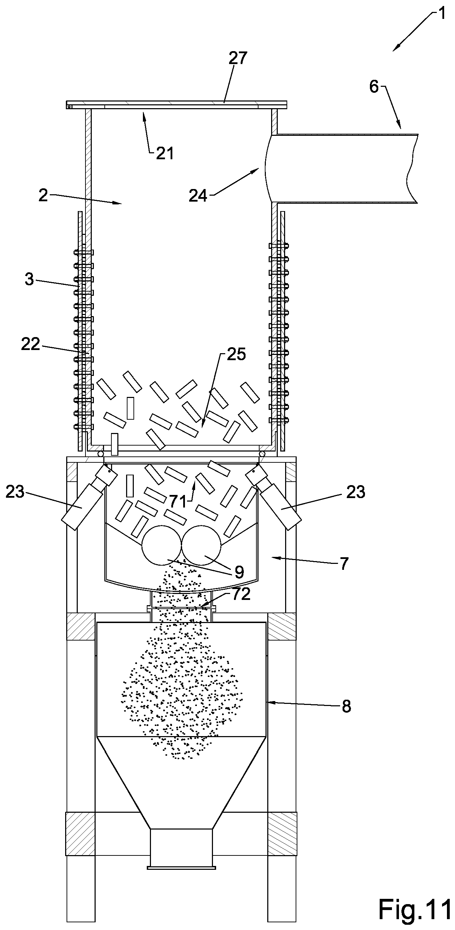

In particular, an outlet mouth **72** is defined in the lower part of the tank **7** which allows the passage of the black mass powder or of the discharged batteries from inside the tank **7** towards this collection chamber **8,** as shown in Figure 11.

It is not excluded that, according to alternative embodiments of the invention, this collection chamber **8** is not present and the tank **7** also acts as a collection chamber for the aforesaid black mass powder or for the discharged batteries in the unground form.

The aforesaid device **1** according to the first or second embodiment of the invention can form an integral part of a battery treatment plant.

In particular, the plant according to the invention comprises at least one inactivation unit for discharging the electric charge of batteries, cells and/or rechargeable batteries, particularly batteries, cells and/or rechargeable batteries selected from the group comprising lithium, lithium-ion, lithium-polymer and nickel metal batteries, cells and rechargeable batteries.

This inactivation unit is provided with a device **1** comprising the characteristics reported for the first or second embodiment of the invention, including the variants.

Advantageously, the plant of the present invention further comprises a grinding unit located downstream of the inactivation unit and configured to grind the discharged batteries received from the device **1.**

This grinding unit makes it possible to grind the batteries to produce black mass powder of particles with sizes of less than 5000 µm, preferably less than 1500 µm, more preferably with sizes comprised between 200 and 1000 µm.

It is not excluded that, when the aforesaid plant comprises an inactivation unit provided with the device **1** according to the second embodiment of the invention, this grinding unit comprises the grinding means **9** described above. Returning to the plant according to the invention, it further comprises a vibro-sieving unit arranged downstream of the grinding unit.

This vibro-sieving unit is configured to vibro-sieve the black mass powder particles coming from the grinding unit, separating the fraction of the particles containing iron, copper and/or aluminium.

Advantageously, it is thus possible to separate the fraction of powder rich in metal compounds to be destined for recycling, e.g. lithium spinels, from the fraction of powder containing common metals usually destined for recovery with other mechanical and chemical systems.

The aforesaid vibro-sieving unit is preferably provided with one or more sieves of the order of magnitude of 50-250 microns, which allow separating iron, copper and aluminium from the fraction of particles rich in compounds belonging to the class of spinels. This fraction of spinels can therefore be used for specific treatments that allow the recovery of the lithium and other metals present, as well as to obtain new usable cathode material.

Still advantageously, the presence of a vibro-sieving unit allows to eliminate any lumps or aggregates of particles present in the black mass powder, making this mixture of particles homogeneous.

However, it is not excluded that, in alternative embodiments of the invention, this vibro-sieving unit is an integral part of the device **1** or that this vibro-sieving unit is not present and the black mass powder can be made more homogeneous by means of **a** mechanical rubbing or centrifugation action according to methods per se known.

The device **1** according to the first or second embodiment of the invention, including the variants, and the plant described above are configured to implement the method for discharging the electric charge of batteries, cells and/or rechargeable batteries which will now be described.

In fact, part of the present invention is a method for discharging the electric charge of batteries, cells and/or rechargeable batteries, preferably batteries, cells and/or rechargeable batteries selected from the group comprising lithium, lithium-ion, lithium polymer and nickel metal batteries, cells and rechargeable batteries.

This method allows these batteries to be discharged, making them handleable by operators in order to recover or recycle them with no risk of fire or explosions and without releasing harmful gases into the environment.

In particular, the method of the invention provides for discharging the electric charge of the batteries by heating and for this heating to be obtained by induction on the walls **22** of the inactivation chamber **2** and by irradiation of the batteries contained in the aforesaid inactivation chamber **2** by the walls **22.**

Operationally, the batteries to be discharged are introduced into the inactivation chamber **2,** as shown in Figure 9.

Preferably, these batteries are arranged inside the inactivation chamber **2** in such a quantity that the ratio between the volume occupied by the batteries to be discharged inside the inactivation chamber **2** and the vacuum volume inside the inactivation chamber **2** is about 0.5-1.5:0.5-1.5, more preferably the ratio is 1:1.

Once these batteries have been introduced into the inactivation chamber **2,** the inactivation chamber **2** is isolated from the external environment by closing the bottom **23** and/or the cover **27.**

The method of the invention further provides for the elimination of any oxygen and humidity present inside the inactivation chamber **2** so that the subsequent heating, which will now be described, takes place in a dry mode.

The presence of oxygen and/or humidity in the inactivation chamber **2** in fact prevents the electric charge of the aforesaid batteries from being discharged while maintaining the state of the metal compounds contained in the aforesaid batteries unaltered.

The elimination of the oxygen and of the humidity present in the inactivation chamber **2** takes place by activating the inerting means which introduce one or more inert gases into the inactivation chamber **2,** such as carbon dioxide, nitrogen, argon or mixtures thereof.

Preferably, the inerting means introduce carbon dioxide into the inactivation chamber **2.**

Subsequently, at least one wall **22** of the inactivation chamber **2** is heated by the passage of an electric current, preferably an alternating electric current, in the inductive winding **3** arranged externally to these walls **22** for at least a predefined time interval.

The heating by induction of the walls **22** and optionally of the bottom **23** by the inductive winding **3** causes the heating by radiation of the batteries arranged inside the inactivation chamber **2** by the walls **22,** as represented in Figure 10.

According to the method of the invention, the frequency of this electric current is comprised between 2 and 6 kHz, preferably between 3 and 5 kHz, more preferably is about 4 kHz.

The electric current is preferably alternating electric current.

The current voltage is preferably about 500 Volts.

Preferably, the power of the electric current used to generate this induction is comprised between 5 and 70 kW, more preferably comprised between **8** and 40 kW, even more preferably between 12 kW and 35 kW.

Furthermore, according to the method of the invention, this electric current is applied for a predefined time interval longer than 5 minutes.

It is not excluded that, according to alternative embodiments of the method, this predefined time interval is different from what is indicated.

In particular, the method provides for heating such batteries until a temperature lower than 650°C, preferably lower than 550°C, is reached inside the inactivation chamber **2.**

Advantageously, the observance of this temperature allows to obtain the total discharge of the batteries by inhibiting the potential reactions caused by the presence of metallic lithium and controlling the emission of harmful gases. Furthermore, by observing this temperature, the metals contained in the aforesaid batteries retain an optimal chemical form for their recovery.

This last characteristic has proved to be particularly advantageous because it allows such discharged batteries to be used for the recovery of the anode and cathode materials contained therein.

During the heating of the batteries, it is preferable to keep the inactivation chamber **2** in slight depression, at about -0.1/-0.2 mbar, to facilitate the direction of the combustion gases towards the opening **24** and the gas abatement group **6.**

According to the method of the invention, after heating the aforesaid batteries by irradiation, the discharged batteries are ground to produce solid particles, the so-called black mass powder, as shown in Figure 11.

Grinding can be carried out by the grinding means **9** of the device **1.**

It should be noted that this grinding is carried out exclusively after heating the aforesaid batteries.

The batteries, in fact, must have been completely discharged by heating by irradiation before being ground, in order to avoid that harmful gases are released during said grinding, or that the batteries themselves can explode.

Advantageously, thanks to the method of the invention, this grinding operation can also be carried out in non-inertized environments, that is, containing oxygen or water vapour, with no risk of explosions or emission of toxic gases.

This battery powder is preferably composed of particles having sizes of less than 5000 µm, preferably less than 1500 µm, more preferably with a size comprised between 200 and 1000 µm.

After the grinding operation, the method of the invention provides for carrying out a vibro-sieving operation in which the aforesaid powder coming from the grinding operation is vibro-sieved by means of one or more sieves of the type per se known, to separate the fraction of particles containing iron, copper and aluminium from the fraction of particles rich in metal oxides relating to the lithium spinel class.

It is not excluded that, according to alternative embodiments of the method of the invention, this vibro-sieving operation is not present and/or that the separation of the black mass powder particles into fractions of particles containing different materials is carried out in different ways from what is indicated, for example by magnetic separation or centrifugation.

It is evident that the method of the invention, according to the preferred embodiment of the invention, including the variants, can be carried out in a continuous or discontinuous mode.

Advantageously, the continuous mode allows to treat several groups of batteries simultaneously.

In fact, by means of the method of the invention, it is possible to carry out the heating operation of a first group of batteries to be discharged simultaneously with the grinding operation of a second group of previously discharged batteries. Furthermore, at the same time as these operations it is also possible to carry out the vibro-sieving operation of a further group of batteries, different from the previous ones, already subjected to heating and grinding.

It is not excluded that, according to alternative embodiments of the invention, the grinding operation and/or the vibro-sieving operation of a first group of batteries are not carried out at the same time as the heating operation of a second group of batteries or they are not present.

Advantageously, the method of the invention allows to obtain black mass powder directly from the batteries, without using aqueous solutions as for known methods.

The production of rejection waste solutions/substances is therefore reduced, which would require special waste disposal operations. Consequently, the environmental impact of the method of the invention has decreased with respect to known methods.

On the basis of what has been said, therefore, the method, the device 1 and the plant of the invention achieve all the intended objects.

In particular, the method of the invention allows to inactivate/discharge the batteries, cells and/or rechargeable batteries so that they can be subjected to grinding and treatment for recycling and recovery of the materials of which they are made with no risk of developing fires or explosions or emission of harmful gases.

Furthermore, the device of the invention can be integrated into a plant for recycling and recovery of batteries of the known type, with no need to adapt or modify pre-existing plants.

Furthermore, the device for discharging the electric charge of batteries according to the invention allows to implement the aforesaid method and to obtain discharged batteries and powder of such batteries in a dry mode, i.e. without making liquid solutions or suspensions of such batteries and with no need to use aqueous solutions that should otherwise be disposed of in accordance with special waste regulations.

The invention will now be described with some examples which are to be considered as illustrative and not limitating.

### Example 1

After sorting out different types of used batteries and eliminating their plastic packaging components, 3 kilograms of selected AAA lithium-ion batteries were loaded into the inactivation chamber **2** of a device **1** according to the first embodiment of the invention.

The inside of this inactivation chamber **2** was inerted with CO₂ inert gas and placed at a slight depression of -0.18 mbar.

The batteries were therefore heated by operating the inductive winding **3.** A power of 12.5 kW, a frequency of 4 kHz and a voltage of 500 V were used. The temperature reached inside the inactivation chamber **2** after triggering the heating was about 550°C.

The passage of electric current was modulated and interrupted after about 60 minutes.

Subsequently, the batteries were extracted from the inactivation chamber **2.** They proved to be odourless and totally free of residual charge.

### Example 2

After sorting out different types of used batteries and eliminating their plastic packaging components, 10 kilograms of selected lithium-ion and lithium-ion-polymer batteries coming from mobile phones were loaded into the inactivation chamber **2** of the device **1** used for example 1.

The inside of the inactivation chamber **2** was inerted with CO₂ inert gas and placed at a slight depression of -0.18 mbar.

The batteries were therefore heated by operating the inductive winding **3** at a power of 12.5 kW, a frequency of 4 kHz and a voltage of 500 V.

The temperature reached inside the inactivation chamber 2 was about 510°C. During heating, the electrical power of the inductive winding **3** was modulated. The passage of electric current was interrupted after about 65 minutes and the batteries were removed from the inactivation chamber **2.**

The weight of the batteries removed from the inactivation chamber 2 proved to have been reduced by 20% following heating.

They proved to be odourless and totally free of residual charge.

### Example 3

After sorting out different types of used batteries and eliminating their plastic packaging components, 14 kilograms of selected AAA lithium and lithium-ion batteries were loaded into the inactivation chamber **2** of the device **1** used for example 1.

The inside of the inactivation chamber **2** was inerted with CO₂ inert gas and placed at a slight depression of -0.18 mbar.

The batteries were therefore heated by operating the inductive winding **3** at a power of 12.5 kW, a frequency of 4 kHz and a voltage of 500 V.

The temperature reached inside the inactivation chamber **2** was about 550°C.

The passage of electric current was modulated and interrupted after about 50 minutes. Subsequently, the batteries were removed from the inactivation chamber **2.**

They proved to be open, odourless and totally free of residual charge.

## Claims

1. A method for discharging the electric charge of batteries, cells and/or rechargeable batteries, **characterized by** comprising the following operations:
- introducing said batteries, cells and/or rechargeable batteries to be discharged into an inactivation chamber (2) delimited by one or more walls (22) and by a bottom (23), said walls (22) being made of a material adapted to transmit heat;
- eliminating the oxygen and the humidity present inside said inactivation chamber (2), if any;
- heating by induction said one or more walls (22) so that said one or more walls (22) heat by radiation said batteries, cells and/or rechargeable batteries arranged inside said inactivation chamber (2), the environment inside said inactivation chamber (2) being devoid of humidity and oxygen, said induction being generated by the passage of electric current in at least one inductive winding (3) arranged externally to said walls (22) and wound around a winding axis (A), said winding axis (A) being preferably orthogonal to said bottom (23), said passage of electric current being made for at least a predefined time interval suited to cause the heating by radiation of said batteries, cells and/or rechargeable batteries arranged inside said inactivation chamber (2) by said walls (22).

2. The method according to the preceding claim, **characterized in that** said batteries, cells and/or rechargeable batteries are selected from the group comprising lithium, lithium-ion, lithium polymer and nickel metal batteries, cells and rechargeable batteries.

3. The method according to any one of the preceding claims, **characterized by the fact** of grinding said batteries, cells and/or rechargeable batteries into solid particles after said heating by irradiation.

4. The method according to any one of the preceding claims, **characterized in that** the frequency of the electric current used to generate said induction is comprised between 3 and 5 kHz, preferably is about 4 kHz; preferably the power of the electric current used to generate said induction is comprised between 5 kW and 70 kW, more preferably between 8 kW and 40 kW.

5. The method according to any one of the preceding claims, **characterized by the fact** of heating said batteries, cells and/or rechargeable batteries to a temperature lower than 650°C, preferably lower than 550°C.

6. The method according to any one of the preceding claims, **characterized by the fact** of introducing said batteries, cells and/or rechargeable batteries to be discharged into said inactivation chamber (2) in such a quantity that the ratio between the volume occupied by said batteries, cells and/or rechargeable batteries to be discharged inside said inactivation chamber (2) and the vacuum volume inside said inactivation chamber (2) is about 0.5-1.5:0.5-1.5, preferably said ratio being 1:1.

## Patentansprüche

1. Verfahren zum Entladen der elektrischen Ladung von Batterien, Zellen bzw. Akkumulatoren, **dadurch gekennzeichnet, dass** es die folgenden Schritte umfasst:
- Einführen der zu entladenden besagten Batterien, Zellen bzw. Akkumulatoren in eine Inaktivierungskammer (2), die durch eine oder mehrere Wände (22) und einen Boden (23) begrenzt ist, wobei die besagten Wände (22) aus einem Material hergestellt sind, das dazu geeignet ist, Wärme zu übertragen;
- Eliminieren des Sauerstoffs und der Feuchtigkeit, die ggf. in der besagten Inaktivierungskammer (2) vorhanden sind;
- Erwärmen der besagten einen oder der besagten mehreren Wände (22) durch Induktion, sodass die besagte eine oder die besagten mehreren Wände (22) die besagten Batterien, Zellen bzw. Akkumulatoren, die in der besagten Inaktivierungskammer (2) angeordnet sind, durch Strahlung erwärmen, wobei die Umgebung in der besagten Inaktivierungskammer (2) frei von Feuchtigkeit und Sauerstoff ist, wobei die besagte Induktion durch den Durchgang von elektrischem Strom in mindestens einer induktiven Wicklung (3), die außen an den besagten Wänden (22) angeordnet ist und um eine Wicklungsachse (A) gewickelt ist, erzeugt wird, wobei die besagte Wicklungsachse (A) vorzugsweise orthogonal zum besagten Boden (23) ist, wobei der besagte Durchgang von elektrischem Strom für mindestens ein vordefiniertes Zeitintervall erfolgt, das dazu geeignet ist, die Erwärmung der besagten Batterien, Zellen bzw. Akkumulatoren, die in der besagten Inaktivierungskammer (2) angeordnet sind, durch Strahlung durch die besagten Wände (22) zu bewirken.

2. Verfahren nach dem vorhergehenden Patentanspruch, **dadurch gekennzeichnet, dass** die besagten Batterien, Zellen bzw. Akkumulatoren aus der Gruppe ausgewählt werden, die Lithium-, Lithium-Ionen-, Lithium-Polymer- und Nickel-Metall-Batterien, -Zellen und -Akkumulatoren umfasst.

3. Verfahren nach jeglichem der vorhergehenden Patentansprüche, **dadurch gekennzeichnet, dass** die besagten Batterien, Zellen bzw. Akkumulatoren nach dem besagten Erwärmen durch Strahlung zu Feststoffpartikeln vermahlen werden.

4. Verfahren nach jeglichem der vorhergehenden Patentansprüche, **dadurch gekennzeichnet, dass** die Frequenz des elektrischen Stroms, der zum Erzeugen der besagten Induktion verwendet wird, zwischen 3 und 5 kHz liegt, vorzugsweise etwa 4 kHz beträgt; die Leistung des elektrischen Stroms, der zum Erzeugen der besagten Induktion verwendet wird, liegt vorzugsweise zwischen 5 kW und 70 kW, noch bevorzugter zwischen 8 kW und 40 kW.

5. Verfahren nach jeglichem der vorhergehenden Patentansprüche, **dadurch gekennzeichnet, dass** die besagten Batterien, Zellen bzw. Akkumulatoren auf eine Temperatur von weniger als 650 °C, vorzugsweise weniger als 550 °C, erwärmt werden.

6. Verfahren nach jeglichem der vorhergehenden Patentansprüche, **dadurch gekennzeichnet, dass** die zu entladenden besagten Batterien, Zellen bzw. Akkumulatoren in die besagte Inaktivierungskammer (2) in einer solchen Menge eingeführt werden, dass das Verhältnis zwischen dem Volumen, das von den zu entladenden besagten Batterien, Zellen bzw. Akkumulatoren in der besagten Inaktivierungskammer (2) eingenommen wird, und dem Vakuumvolumen in der besagten Inaktivierungskammer (2) etwa 0,5-1,5:0,5-1,5 beträgt, wobei das besagte Verhältnis vorzugsweise 1:1 beträgt.

## Revendications

1. Procédé de décharge de la charge électrique de batteries, de cellules et/ou de batteries rechargeables, **caractérisé en ce qu'**il comprend les opérations suivantes:
- introduction desdites batteries, cellules et/ou batteries rechargeables à décharger dans une chambre d'inactivation (2) délimitée par une ou plusieurs parois (22) et par un fond (23), lesdites parois (22) étant réalisées en un matériau adapté pour transmettre la chaleur;
- élimination de l'oxygène et de l'humidité éventuellement présents à l'intérieur de ladite chambre d'inactivation (2);
- chauffage par induction de ladite une ou plusieurs parois (22) de sorte que ladite une ou plusieurs parois (22) chauffent par rayonnement lesdites batteries, cellules et/ou batteries rechargeables disposées à l'intérieur de ladite chambre d'inactivation (2), l'environnement à l'intérieur de ladite chambre d'inactivation (2) étant dépourvu d'humidité et d'oxygène, ladite induction étant générée par le passage d'un courant électrique dans au moins un enroulement inductif (3) disposé à l'extérieur desdites parois (22) et enroulé autour d'un axe d'enroulement (A), ledit axe d'enroulement (A) étant de préférence orthogonal audit fond (23), ledit passage de courant électrique étant effectué pendant au moins un intervalle de temps prédéfini indiqué pour provoquer le chauffage par rayonnement desdites batteries, cellules et/ou batteries rechargeables disposées à l'intérieur de ladite chambre d'inactivation (2) par lesdites parois (22).

2. Procédé selon la revendication précédente, **caractérisé en ce que** lesdites batteries, cellules et/ou batteries rechargeables sont choisies dans le groupe comprenant les batteries, les cellules et les batteries rechargeables au lithium, au lithium-ion, au lithium polymère et au nickel-métal.

3. Procédé selon l'une quelconque des revendications précédentes, **caractérisé par le fait** de broyer lesdites batteries, cellules et/ou batteries rechargeables en particules solides après ledit chauffage par rayonnement.

4. Procédé selon l'une quelconque des revendications précédentes, **caractérisé en ce que** la fréquence du courant électrique utilisé pour générer ladite induction est comprise entre 3 et 5 kHz, de préférence environ 4 kHz; de préférence, la puissance du courant électrique utilisé pour générer ladite induction est comprise entre 5 kW et 70 kW, plus préférablement entre 8 kW et 40 kW.

5. Procédé selon l'une quelconque des revendications précédentes, **caractérisé par le fait** de chauffer lesdites batteries, cellules et/ou batteries rechargeables à une température inférieure à 650 °C, de préférence inférieure à 550 °C.

6. Procédé selon l'une quelconque des revendications précédentes, **caractérisé par le fait** d'introduire lesdites batteries, cellules et/ou batteries rechargeables à décharger dans ladite chambre d'inactivation (2) en une quantité telle que le rapport entre le volume occupé par lesdites batteries, cellules et/ou batteries rechargeables à décharger dans ladite chambre d'inactivation (2) et le volume de vide à l'intérieur de ladite chambre d'inactivation (2) est d'environ 0,5-1,5:0,5-1,5, de préférence ledit rapport étant de 1:1.
